# EUROPEAN PATENT SPECIFICATION

(11) **EP 3 640 217 B1**
(45) Date of publication and mention of the grant of the patent: **21.07.2021**
(21) Application number: 18200457.2
(22) Date of filing: 15.10.2018
(51) Int. Cl.: C02F 1/467, C02F 1/461

(54) **ELECTRODE ASSEMBLY AND METHOD FOR INACTIVATING ORGANIC MATERIAL IN A FLOW OF WATER**
ELEKTRODENANORDNUNG UND VERFAHREN ZUR INAKTIVIERUNG VON ORGANISCHEM MATERIAL IN EINEM WASSERSTROM
ENSEMBLE D'ÉLECTRODES ET PROCÉDÉ D'INACTIVATION DE MATIÈRE ORGANIQUE DANS UN ÉCOULEMENT D'EAU

(43) Date of publication of application: 22.04.2020
(73) Proprietor: National Oilwell Varco Norway AS, 4604 Kristiansand S (NO)
(72) Inventor: Varanko, Yury, 4322 Sandnes (NO); Dirdal, Eirik, 4070 Randaberg (NO)
(74) Representative: Håmsø Patentbyrå AS

(56) References cited:
- SU-A1- 958 329
- US-A- 3 196 095
- US-A1- 2016 090 314
- US-B2- 8 080 150

## Description

The invention relates to an electrode assembly for the production of short-lived free radicals, such as hydroxyl (OH-) radicals, chlorine dioxide, dissolved ozone, and hydrogen peroxide, with the aim of inactivating organic material from water in a flow of water, before injection into a well. Furthermore, the invention relates to a method for inactivating organic material in a flow of water, by means of the electrode assembly.

By "inactivating organic material" is herein particularly meant to kill off microorganisms such as plankton, bacteria, protozoa and viruses present in a flow of water.

Electrochemical production of oxidants, such as free hydroxyl radicals, is well known and widely used in the water treatment industry with the purpose of inactivating organic material and thus disinfecting the water. It is known to use electrode meshes which are arranged perpendicularly to the flow of water. It is a challenge that higher order oxidants are extremely reactive and will undergo a chemical reaction within nanoseconds after they are formed. It is therefore only the water which is close to the electrodes which will be treated by the free hydroxyl radicals.

Patent publication US 8080150 B2 shows an example of an electrolytic cell wherein the electrodes are arranged substantially perpendicular to the flow of water. The electrodes are arranged in pairs, one cathode and one anode, wherein the electrodes within each pair are arranged at a relatively small distance from each other. One disadvantage of arranging the electrodes perpendicular to the flow of water is that the contact area between the water and the electrodes is limited. This disadvantage results in a treatment process which is less efficient than with a larger contact area.

The invention has for its object to remedy or to reduce at least one of the drawbacks of the prior art or at least to provide a useful alternative to prior art.

The object is achieved through features, which are specified in the description below and in the claims that follow.

The invention is defined by the independent patent claims. The dependent claims define advantageous embodiments of the invention.

The applicant has invented an electrode assembly which is disclosed in the European patent application EP2017168711 which was unpublished at the time of filing the present application. The invention which is disclosed in the present application, is an improvement of the electrode assembly of EP2017168711. Therefore, the parts of the description which is similar and/or relevant for both inventions, will be included below.

In a first aspect the invention relates more particularly to an electrode assembly for the production of injection water for a petroleum well by inactivating organic material in a flow of water, the electrode assembly having a longitudinal axis, and comprising:
- at least one electrode unit comprising at least two electrodes whereof at least one anode and one cathode, the anode corresponding to and being arranged in close proximity to the cathode, wherein at least a part of the electrode unit is funnel-shaped along the longitudinal axis so that at least a part of each electrode is arranged at an angle with respect to the longitudinal axis of the electrode unit, and wherein each electrode comprises mesh for water to pass through;
- a tubular housing for enclosing the at least one electrode unit and for defining a flow path for the flow of water, wherein the electrode unit is arranged so in the flow path that the water entering the tubular housing passes through the mesh of both the anode and the cathode for bringing the organic material in the flow of water into contact with radicals produced between the anode and the cathode thus inactivating said organic material;
the electrode assembly being provided with a flow divider for distributing the flow of water over the mesh of the electrodes.

Herein, the term "perforated portion" is used to refer to the mesh of the electrodes.

The electrode assembly is an electrolytic device which, when connected to a power supply, is able to produce free radicals, such as for instance hydroxyl (OH-) radicals. For treatment of water which is contaminated by organic material, the electrode assembly is placed so that a flow of contaminated water may enter in through an inlet opening of the housing, pass through the electrodes and exit out through an outlet opening of the housing. The flow path defined by the housing thus runs from the inlet opening to the outlet opening. Said flow path will in the following also be referred to as a confined space. The electrode assembly may preferably be oriented in such a way that the overall flow direction of the flow of water upon entering the confined space of the tubular housing is substantially aligned with the longitudinal axis of the electrode assembly. At least a part of the electrode unit is funnel-shaped along the longitudinal axis so that at least a part of each electrode is arranged at an angle with respect to the longitudinal axis of the electrode assembly. This allows for a large contact surface for the water to be treated. This solves the problem of the short contact time for electrodes arranged perpendicularly to the flow of water, which was also solved by EP2017168711.

In order to solve the problem of small contact surface, it is known from prior art to arrange solid, plate-shaped electrodes parallel to the flow of water. An example of this is shown in US patent number 5419824. This solution provides larger contact area since the water flows along the electrodes. One challenge for this kind of arrangement is that the large contact area is not effective and a large portion of water will pass through the cell/electrode unit without sufficient exposure to oxidation agents. The electrode assembly according to the invention and also according to EP2017168711 reduces the pressure drop due to the perforated portions of the electrodes. In this manner the electrode assembly gets a large effective electrode area at the same time as it allows for high flow rate. High flow rate is an advantage when large volumes of water are to be treated.

The funnel-shaped portion advantageously comprises the perforated portion. The funnel-shaped, perforated portion forms a continuous structure through which water can flow. Such a continuous structure is easy to install in a flow of water, and it provides good predictability of the treatment of the water, since all the water which is directed through the electrode assembly will be in contact with the electrode members.

In addition to solving the same problems as EP2017168711, the electrode assembly disclosed herein is provided with flow improving means which distributes the water more evenly over the electrodes and thereby causes more efficient treatment of the water.

The electrodes may extend in the longitudinal direction of the electrode assembly. By the term "extend in the longitudinal direction" as used herein, is meant that the extension of the electrodes is larger in the longitudinal direction of the electrode assembly, than in any other direction.

It must be understood that the flow improving means may be used in combination with other electrode units than the electrode unit comprising a funnel-shaped portion according to the first aspect of the invention. Particularly, any embodiment of the electrode unit described herein, and as disclosed in EP2017168711, may be improved by providing flow improving means as disclosed herein, in the flow of water, preferably arranged on an inner wall of the housing in which the electrode unit(s) is/are arranged.

The anode and the cathode are arranged in "close proximity" to each other. The distance between the anode and the cathode may vary depending on other factors such as the power used. The farther the anode and the cathode are from each other, the more power is needed. And the other way around. However, if the anode and the cathode are too close together, deflection may cause them to get in contact with each other. This is also dependent on the size and shape of the electrodes. In one embodiment, the distance between the anode and the cathode is 5 mm. However, the invention would work over the entire range from 1 mm to 20 mm and even in ranges from 1 to 200 mm depending on size of the entire electrode assembly and the practical solution of the electrode assembly. The skilled person would know how to adjust the distance in accordance with the other factors involved, like power, size, and shape.

The flow improving means may be arranged in connection with the tubular housing.

The flow improving means may comprise at least one baffle. The baffle may be arranged on the inside of the housing. A plurality of baffles may be distributed evenly around the inside of the housing so that the water is directed to substantially all areas of the electrodes.

Alternatively, the flow improving means may comprise grooves in the inner wall of the housing.

Also, alternatively, the flow improving means may comprise nozzles arranged to distribute the flow of water over the electrodes.

Each of the electrodes may comprise at least three electrode members arranged at an angle relative to each other to form the funnel-shaped portion of the electrode unit. Each of the electrode members may comprise a perforated area, said areas together constituting at least part of the perforated portion of the electrodes. This is a possible embodiment of the electrode assembly.

The electrode members, as they form part of the funnel-shaped portion, may be inclined with respect to the longitudinal axis of the electrode assembly. If the electrode members are inclined with respect to the longitudinal axis of the electrode assembly, the water will hit the electrode members at different angles. Depending on whether or not the funnel-shaped portion is symmetrically arranged around the longitudinal axis of the electrode assembly, at least two, possibly all three or more, electrode members are inclined with respect to the longitudinal axis of the electrode assembly.

The electrode assembly is arranged to be placed so that a flow of water to be cleaned may enter the housing of the electrode assembly via an inlet opening, be distributed over the surface of the electrodes by means of the flow improving means, flow through the electrodes, and exit the housing via an outlet opening. On its way through the electrode assembly, the flow of water will obviously be disturbed by the electrodes and the flow direction of the water will therefore not be uniform. When water passes through the perforated portions of the electrode members it will get in contact with radicals produced between the anode and the cathode, and any organic material in the water will be inactivated. When the electrode members are tilted with regard to the longitudinal axis of the electrode assembly, it is possible to obtain a large contact area between the water and the electrode members at the same time as the pressure drop is reduced even further.

The electrode members of the anode and the electrode members of the cathode may be arranged substantially equidistant with regard to each other. This may for example be done by providing a spacer between the electrode members of the anode and the electrode members of the cathode, to ensure that the distance is at least substantially equal everywhere. The effect of having the same distance between the electrode members throughout the entire extension of the electrode members is that the treatment of the water will be more uniform and more predictable than if the distance varies. In an alternative embodiment, the spacer may be made with a varying thickness, so as to have a slightly changing distance between the electrodes over the electrode area.

The electrode members may preferably be arranged around the longitudinal axis of the electrode assembly. If the electrode members are inclined with regard to the longitudinal axis, this means that the electrode members at a first end are close to the longitudinal axis and at a second end are further away from the longitudinal axis. Therefore, it is advantageous if the electrode members, and in particular the perforated portion of the electrode members, are wider at the second end than they are at the first end. It would be even more advantageous if the width of the electrode members gradually increases from the first end to the second end. The electrode members may for instance have the shape of triangles or trapeziums, or in particular isosceles triangles or trapeziums, but are not limited thereto. The electrode members may alternatively be for instance rectangles. The shape of the electrode members, and their optional growing contact surface from the first end to the second end, will influence on the efficiency of the water treatment. The larger the contact surface, the more efficient treatment. The electrode units may be placed in the flow of water either so that water enters the narrower part of the electrode assembly, i.e. where the electrode members are closest to the longitudinal axis, or so that water enters the wider part of the electrode assembly, i.e. where the electrode members are further away from the longitudinal axis of the electrode assembly.

The electrode members may be plate-shaped. This is a possible embodiment of the invention. Plate-shaped electrode members, in particular plate-shaped perforated portions of electrode members, are easy to produce and may easily be adapted to different geometrical shapes. However, the electrode members may alternatively be curved.

The electrode unit may comprise a further electrode. It would be a possible embodiment to provide three electrodes in a sandwich structure, i.e. an anode between two cathodes, since the free radicals are produced on the cathode, and two cathodes thus would provide more free radicals and consequently a more efficient treatment of the water passing through.

The electrode assembly may preferably be arranged so in a flow of water that all of the water has to pass through at least one of the perforated portions of the electrode members.

The electrode members of each electrode may alternatively be arranged so that they constitute the side walls of a prism. The prism may be an oblique prism, i.e. having side walls inclined with regard to the longitudinal axis of the electrode assembly.

The funnel-shaped portion of the electrode unit or the prism may have a polygonal base structure, such as trigonal, tetragonal, pentagonal, or hexagonal. These are possible embodiments of the invention. However, if the electrode members are curved, also a circular or even oval shaped base structure is possible. The base structure is not necessarily limited to a regular shape, also an irregular shape is possible.

The electrode assembly may comprise a plurality of electrode units. Each electrode unit comprises at least two electrodes, one anode and one cathode, as described above. It is possible to provide a plurality of such electrode units in the electrode assembly, either along the same longitudinal axis, i.e. one after the other, or along different longitudinal axes.

The electrode units may be stackable on each other. This is a possible embodiment of the invention.

The/each electrode unit may further comprise a base portion for connecting the electrodes to a power source. The base portion will be provided with an opening for letting the flow of water through the base portion such as to get in contact with the electrodes. In the event that two or more electrode units are arranged along different longitudinal axes, it is preferable that they share the same base portion. The base portion may further be arranged to guide all of the water through the perforated portions of the electrodes when the water enters the electrode unit through the base portion. Furthermore, in embodiments wherein at least one of the electrode units is arranged so that water enters through the base portion, the base portion may be provided with flow improving means for distributing the flow of water over the perforated area of the electrode unit. Such flow improving means may be an integrated part of the base portion, for instance cut-outs, or it may be baffles, or any form of flow divider.

The base portion may be shaped such that the circumference of the base portion substantially corresponds to the outer circumference of the tubular housing. This is a preferable embodiment of the invention because the base portion, with its opening, will guide the entire flow of water which is to be treated, through to the perforated portions of the electrode members when the water enters the electrode unit through the base portion, such that it will get in contact with the free radicals and any organic material will be inactivated. In embodiments where two electrode units share base portion, this is particularly useful.

The tubular housing may comprise of two parts which are connectable to each other, or to an intermediate element connectable to both parts. The base portion may then be such an intermediate element. The base portion may be arranged between the two parts of the tubular housing and connected thereto, so that the tubular housing, the base portion and the electrode members connected to the base portion, form one electrode assembly.

The perforated portions of the electrode units comprises a mesh, either a fine mesh or a coarse mesh.

The electrode members may be provided with power distribution means. It may be preferable to distribute the power along the electrode members in order to provide a more even distribution compared to what is known in the art. Prior art power connection to an electrode is via one point. The idea with a power distribution means is to spread the power to at least two but possibly a plurality of connection points.

The power distribution means may be a slot provided on each electrode member for providing a short-cut for electricity from a point for connecting the electrode member to a power source and to at least two different locations on the perforated portion of the electrode member.

Such power distribution means may comprise a frame for being arranged around a perforated portion of an electrode member, wherein said frame is provided with a slot for providing a short-cut for electricity from a point for connecting the electrode member to a power source and to at least two different locations on the perforated portion of the electrode member.

Herein is also disclosed a treatment system for water contaminated with organic material, wherein the treatment system comprises the electrode assembly according to the first aspect of the invention. Such a treatment system may for instance be for treating injection water before injecting it into a wellbore.

The treatment system may further comprise the power distribution means as described above.

In a second aspect the invention relates more particularly to a method for inactivating organic material in water, wherein the method comprises the following steps:
- providing an electrode assembly according to the first aspect of the invention in a flow of water;
- connecting the electrode assembly to a power source; and
- letting the water in through an inlet opening of the tubular housing, via the flow divider, through the electrodes in a confined space within the tubular housing, and out through an outlet opening of the tubular housing.

In the following are described examples of preferred embodiments illustrated in the accompanying drawings, wherein:
- Fig. 1: shows an electrode assembly;
- Fig. 2: shows an electrode assembly;
- Figs. 3a-3f: shows examples of possible embodiments of electrode assemblies;
- Fig. 4: shows an electrode member of an anode and of a cathode;
- Fig. 5: shows an exploded view of an electrode assembly;
- Fig. 6: is a cross sectional view of an electrode assembly comprising a power supply;
- Fig. 7: is a cross sectional view of an electrode assembly comprising a power supply;
- Fig. 8a: shows a portion of an electrode assembly according to the invention, comprising means for improved flow;
- Fig. 8b: is a perspective view of a portion of a housing provided with flow improving means;
- Fig. 8c: shows the housing portion of Fig. 8b in a plan view; and
- Figs. 9a-b: show a system for water treatment.

The figures are shown in a simplified and schematic manner, and details that are not important in order to highlight what is new about the invention may have been omitted from the figures. The various elements in the figures are not necessarily shown to scale relative to each other. Like or corresponding elements will be indicated by the same reference numeral in the figures.

Any positional specifications such as "over", "under", "above", "below", "left" and "right" reflect the position shown in the figures.

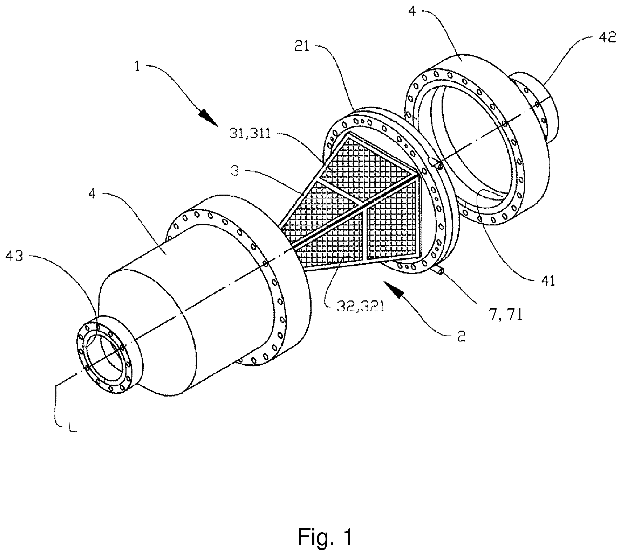

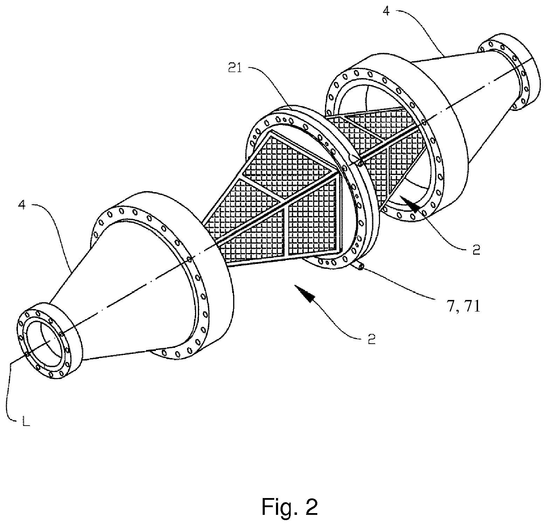

Figures 1-7 are almost identical to Figures 1-7 of the applicant's patent application EP2017168711, unpublished at the time of filing the present application, and are described in detail hereinbelow. The only difference is that the reference number 71 has been added to Figures 1 and 2.

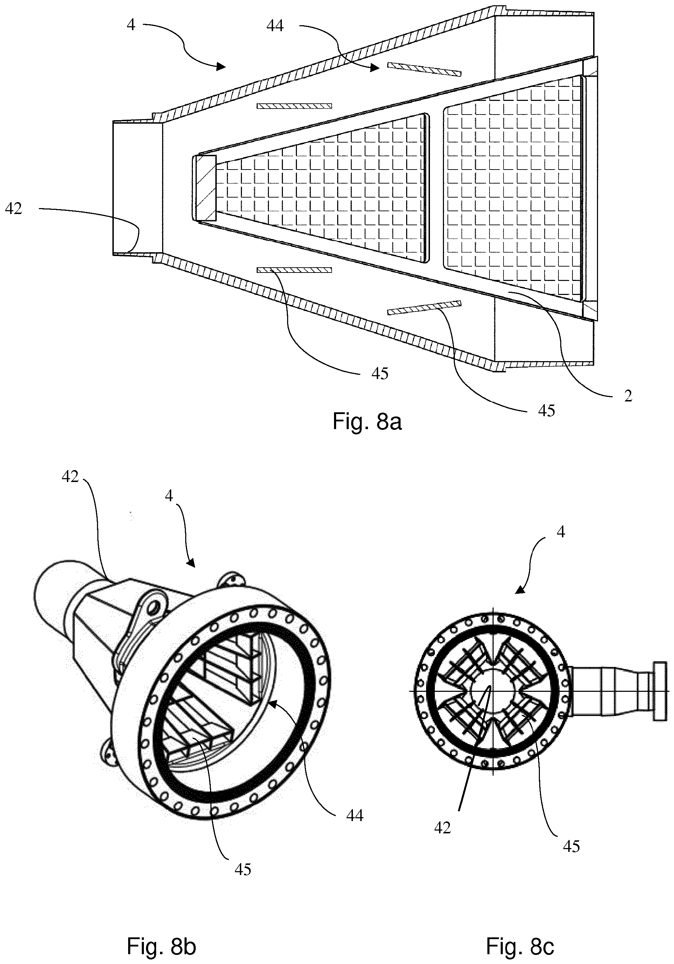

Figures 8a-8c show details of the invention disclosed herein, namely the electrode assembly provided with means for improved flow.

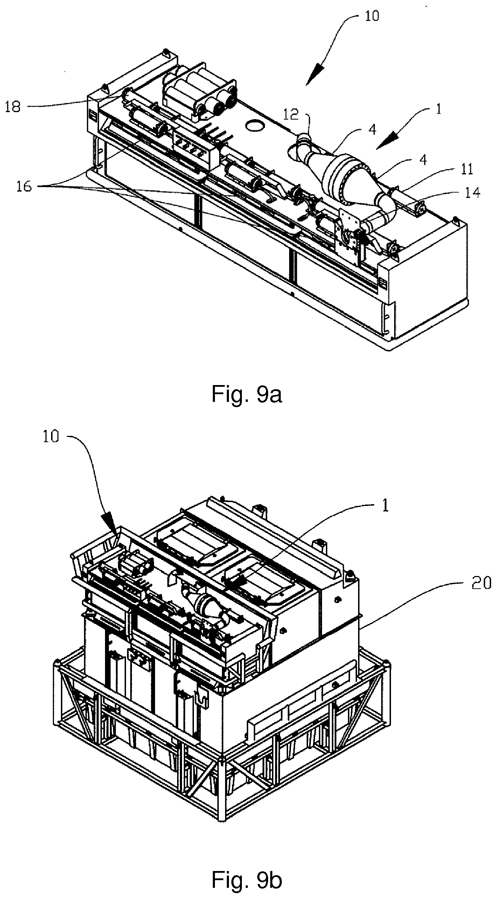

Figures 9a-9b are identical to Figures 8a-8b of EP2017168711. The system illustrated in these Figures, is compatible with the electrode assembly of Figures 8a-8c as well as for the electrode assembly already disclosed in EP2017168711.

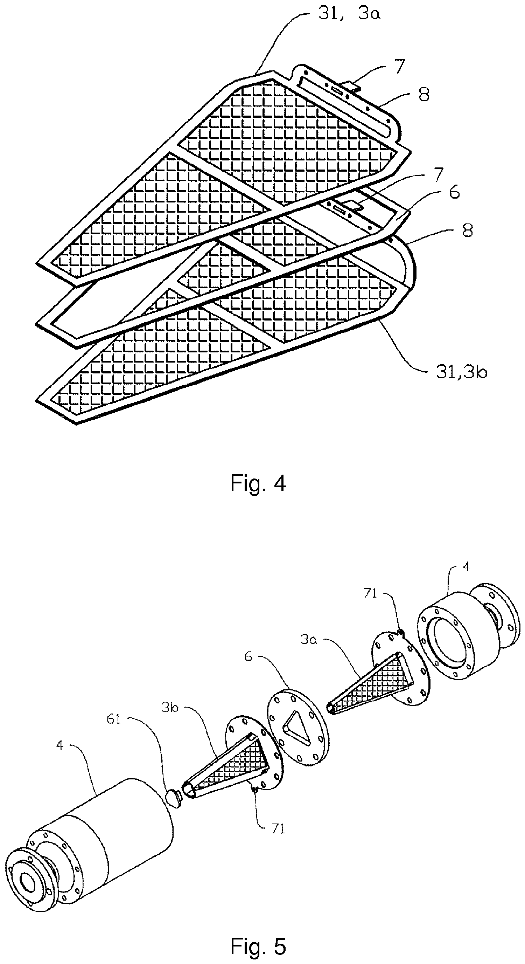

Reference is first made to Figure 1 which shows an electrode assembly 1 having a longitudinal axis L. The electrode assembly 1 is here shown before it is completely assembled. A tubular housing 4 is shown as two parts not yet assembled. An electrode unit 2 is arranged between the two parts of the tubular housing 4. The electrode unit 2 comprises a base portion 21 which is here shown in a shape and size adapted to be sandwiched between, and connected to, the two parts of the tubular housing 4. The electrode unit 2 further comprises electrodes 3, whereof in figure 1 only one is visible, as two electrodes 3, an anode 3a and a cathode 3b (see figures 4 and 5) are arranged one covering the other. The electrodes 3 consist of at least two electrode members 31, 32 each. The electrode members 31, 32 in this Figure are shown to constitute one side each of a square based pyramid, though only two electrode members 31, 32 are visible, each comprising perforated portions 311, 321 for water to pass through. A more detailed illustration of an example of an electrode member 31, 32 is found in Figure 4. The electrode members 31, 32 are connected to the base portion 21. A not shown power source may be connected to the base portion 21 in order to provide the electrodes 3 with electricity such that free radicals may be formed. For this purpose, the electrode units 2 are provided with ears 71 for connecting connection means 7 (see Fig. 4) with the not shown power source.

The tubular housing 4 encloses a confined space 41, and it is provided with an inlet opening 42 and an outlet opening 43. The electrode assembly 1 may be oriented the opposite way in a flow of water, meaning that the inlet opening 42 could instead be the outlet opening, and the outlet opening 43 could instead be the inlet opening.

The electrode members 31, 32 are inclined with regard to the longitudinal axis L, and here they are shown connected to each other.

In figure 2 two electrode units 2 are shown. The electrode units 2 are arranged opposite of each other, sharing the same base portion 21. Alternatively, the electrode units 2 may be provided with one base portion 21 each, and the base portions 21 may be connected to each other. The shape of the tubular housing 4 is altered so as to house both electrode units 2. It must be understood that the shown geometrical shapes of both the housing 4 and of the electrode units 2 are only exemplary. Many different shapes are possible. Also, electrode units 2 may be stacked upon each other instead of, or in addition to, electrode units 2 sharing base portion 21. One electrode assembly 1 may have a plurality of electrode units 2.

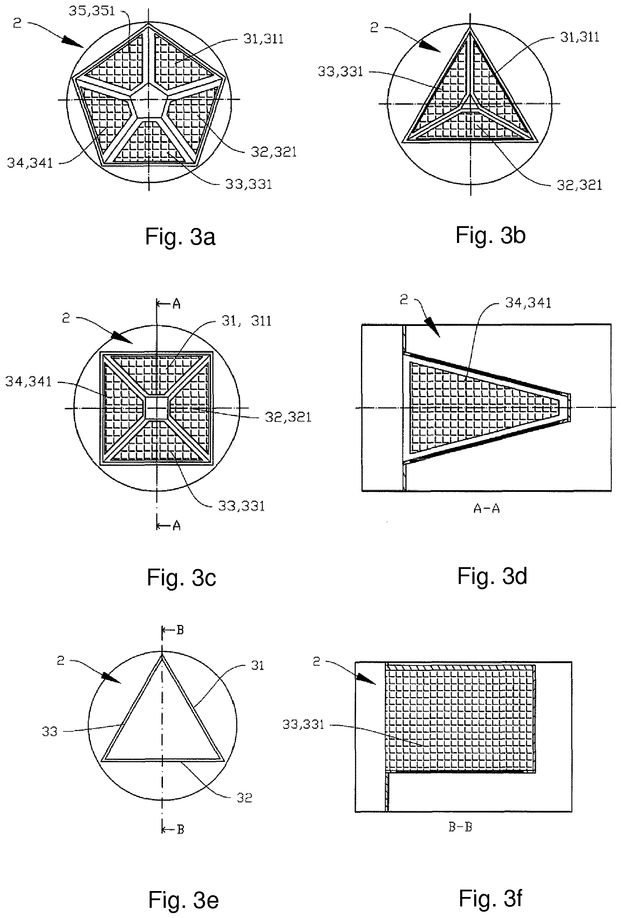

In Figures 3a, 3b, 3c and 3e are shown different possible base structures of the electrode units 2. The electrode units 2 of Figures 3a, 3b, and 3c have a pyramidal shape where each electrode member constitutes one side of the pyramid. Figure 3a shows an electrode unit 2 with a pentagonal base structure. The electrode unit 2 is seen from above. This embodiment of the electrode unit 2 is constituted by five electrode members 31, 32, 33, 34, 35, each having a perforated portion 311, 321, 331, 341, 351. Similarly, figure 3b shows an electrode unit 2 having a trigonal base structure, thus having three electrode members 31, 32, 33 each having a perforated portion 311, 321, 331. In figure 3c the base structure is tetragonal, with electrode members 31, 32, 33, 34 and corresponding perforated portions 311, 321, 331, 341. Figure 3d shows the cross section through the line A-A in figure 3c, where electrode member 34 with perforated portion 341 can be seen in the figure. Figure 3e shows a three-sided prismatic embodiment of an electrode unit which is not part of the invention disclosed herein, wherein the electrode members 31, 32, 33 will be non-inclined with respect to the longitudinal axis L of the electrode assembly when installed therein. Figure 3f shows a cross-section seen through the line B-B from figure 3e, where the electrode member 33 and corresponding mesh 331 can be seen in the figure.

In figure 4 an electrode member 31 of an anode 3a and an electrode member 31 of a cathode 3b are shown in a sandwich structure with a spacer element 6 between the electrode members 31. The purpose of the spacer element 6 is to keep the two electrode members 31 equidistant to each other. Each electrode member is provided with a connecting means 7 for connecting to a power source. Said connecting means 7 is transferring power to the perforated portion 311 of the electrode member 31. Preferably, as shown here, the connecting means 7 is transferring the power via a power distribution means 8. The power distribution means 8 distributes the power from the connecting means 7 to at least two locations of the edge of the perforated portion 311.

Figure 5 shows an embodiment of the electrode assembly 1 in an exploded view. Here the anode 3a and the cathode 3b are shown as trigonal funnel-shaped structures, stackable on each other. The spacer element 6 is here shown as a circular disc with an opening provided therein for receiving the trigonal funnel-shaped portion of the anode 3a and a cap 61 keeping the narrow ends of the electrodes 3a, 3b at fixed position relative to each other and closing the narrow end of the funnels-shaped structure. The connection means 7 of both the anode 3a and the cathode 3b are here shown as ears 71 which, when the embodiment is assembled, will extend on the outside of the tubular housing 4 for easy connection to a power source.

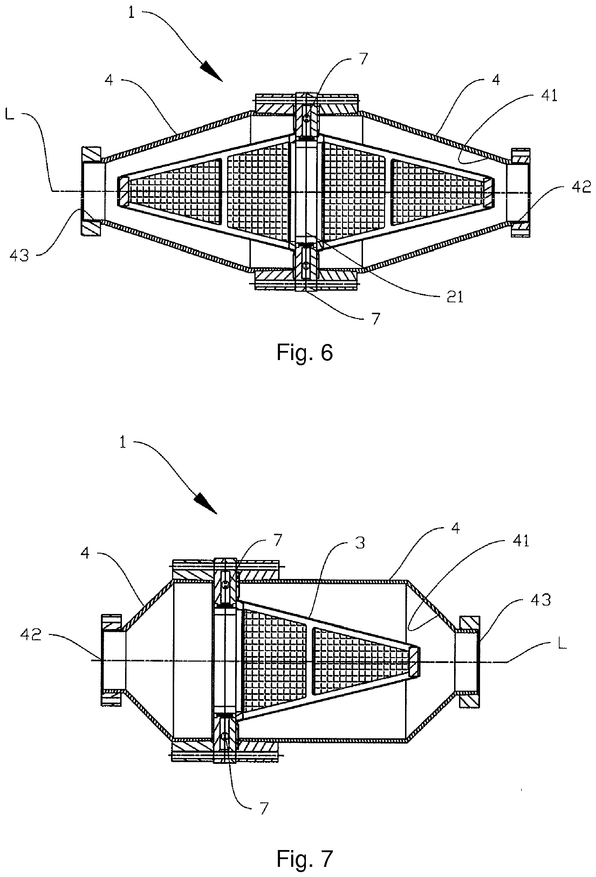

Figure 6 shows an embodiment of the electrode assembly 1 wherein two electrode units 2 are provided. The electrode units 2 are arranged opposite of each other, i.e. they have a common base portion 21.

Figure 7 is a cross-section through the assembled version of the electrode assembly 1 shown in figure 1. The electrodes 3 are provided within the confined space 41 of the tubular housing 4, and the flow direction may be either way through the confined space 41. That means that the inlet opening 42 could alternatively be the outlet opening, and the outlet opening 43 could alternatively be the inlet opening. The connection means 7 extend on the outside of the tubular housing 4.

Other embodiments, for instance an embodiment wherein two or more electrode units 2 are stacked on each other, would also be possible. Or a combination, wherein for instance another electrode unit 2 were stacked upon one of the electrode units 2 of Figure 7, would also be possible.

Figure 8a shows one part of the tubular housing 4 wherein an electrode unit 2 is arranged. Flow improving means 44 are arranged on an inner wall of the tubular housing 4. The flow improving means 44 may comprise at least one baffle 45. In the embodiment shown in the Figure, four baffles 45 are arranged on an inner wall of the tubular housing 4, so that water which enters through the inlet 42 will be directed towards the electrode unit 2 by means of the baffles 45.

Figures 8b and 8c also show one part of the tubular housing 4, but without the electrode unit 2 installed. In this embodiment, four baffles 45 can be seen distributed around the centre axis of the housing 4. It must be understood that the number, size and shapes of the baffles 45 may vary. For instance, in an electrode assembly comprising electrode units where the funnel-shaped portion has a triangular base shape, it may be more convenient having three corresponding baffles 45 than four. Having said that, it must be understood that the number of baffles 45 does not need to correspond to the number of sides of the electrode units. The shown baffles 45 are divided in multiple channels, or flow paths. Alternatively, smaller baffles 45, for instance comprising only one flow path, may be installed, either alone or in groups of two or more. The baffles 45 may be made of glass reinforced polyester (GRP), or any other suitable material known to the skilled person, for instance any metal, such as super duplex steel, titanium, or plastic. The important thing is that the material used, is highly resistant to corrosion.

The baffles 45 may be glued or otherwise, for instance bonded, welded or bolted, fixedly connected to the inner wall of the housing 4. Alternatively, the baffles 45 may be part of the housing 4, i.e. integrated in the inner wall of the housing 4. Also, alternatively, the flow improving means may be grooves in the inner wall of the housing.

Figure 9a shows a water treatment system 10 comprising the electrode assembly 1 described herein. The tubular housing 4 is provided between two pipelines, an inlet 12 and an outlet 14, so as to provide a continuous flow path for water to be treated by the water treatment system 10. The system 10 may comprise a plurality of different treatment units where the electrode assembly 1 for electrolytic treatment of the water constitutes one of the treatment units. The electrode assembly 1 is here shown connected to a power source 11 for providing power to the base portions 21 of the electrode units 2 of the electrode assembly 1, as indicated in figures 1 and 2. Other treatment units may be typically connected to the electrode assembly 1 upstream of the inlet, while a not shown injection well may be connected to the system 10 downstream of the electrode assembly 1. In other embodiments further treatment units may also be provided downstream of the electrode assembly 1. In the shown embodiment, the system 10 is further provided with a plurality of cells 16 for electro-chlorination of seawater powered by a power source 18, the cells constituting one example of such additional treatment units.

In figure 9b the system 10 is shown in an exemplary position of use, where it is provided together with a large container 20 for gravitational precipitation of particles from seawater, where the container is provided upstream of the electrode assembly 1 in the shown embodiment. Further details about the container 20 can e.g. be found in WO 2007/035106 A1 to which reference is made for a more in-depth description of this technology.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

## Claims

1. Electrode assembly (1) for the production of injection water for a petroleum well by inactivating organic material in a flow of water, the electrode assembly (1) having a longitudinal axis (L), and comprising:
- at least one electrode unit (2), comprising at least two electrodes (3) whereof at least one anode (3a) and one cathode (3b), the anode (3a) corresponding to and being arranged in close proximity to the cathode (3b), wherein at least a part of the electrode unit (2) is funnel-shaped along the longitudinal axis so that at least a part of each electrode is arranged at an angle with respect to the longitudinal axis of the electrode unit, and wherein each electrode (3) comprises mesh for water to pass through;
- a tubular housing (4) for enclosing the at least one electrode unit (2) and for defining a flow path for the flow of water, wherein the electrode unit (2) is arranged so in the flow path that the water entering the tubular housing (4) passes through the mesh of both the anode (3a) and the cathode (3b) for bringing the organic material in the flow of water into contact with radicals produced between the anode (3a) and the cathode (3b) thus inactivating said organic material;
wherein the electrode assembly (1) is provided with a flow divider for distributing the flow of water over the mesh of the electrodes (3).

2. Electrode assembly (1) according to claim 1, wherein the flow divider comprises one of the following:
- at least one baffle arranged on an inner wall of the tubular housing (4);
- grooves in the inner wall of the tubular housing (4); and
- nozzles.

3. Electrode assembly (1) according to claim 1 or 2, wherein each of the electrodes (3) comprises at least three electrode members (31, 32, 33) arranged at an angle relative to each other to form the funnel-shaped portion of the electrode unit (2).

4. Electrode assembly (1) according to claim 3, wherein each electrode member (31, 32, 33) comprises a mesh (311, 321, 331).

5. Electrode assembly (1) according to claim 3 or 4, wherein the electrode members (31, 32, 33) are plate-shaped.

6. Electrode assembly (1) according to claim 3 or 4, wherein the electrode members (31, 32, 33) are curved.

7. Electrode assembly (1) according to any one of the previous claims, wherein the electrode unit (2) comprises a further electrode (3).

8. Electrode assembly (1) according to any one of the previous claims, wherein the funnel-shaped portion of the electrode unit (2) has a polygonal base structure, such as trigonal, tetragonal, pentagonal, or hexagonal.

9. Electrode assembly (1) according to any one of the previous claims, comprising a plurality of electrode units (2).

10. Electrode assembly (1) according to claim 9, wherein the electrode units (2) are stackable on each other due to the funnel-shaped portion.

11. Electrode assembly (1) according to any one of the previous claims, wherein the electrode unit (2) further comprises a base portion (21) for connecting the electrodes (3) to a power source.

12. Electrode assembly (1) according to claim 11, wherein the base portion (21) is shaped such that the circumference of the base portion (21) substantially corresponds to the outer circumference of the tubular housing (4).

13. Electrode assembly (1) according to claim 11 or 12, wherein the flow divider (44) is arranged in connection with the base portion (21).

14. Method for inactivating organic material in water, wherein the method comprises the following steps:
- providing an electrode assembly (1) according to claim 1 in a flow of water;
- connecting the electrode assembly (1) to a power source (11); and
- letting the water in through an inlet opening (42) of the tubular housing (4), via the flow divider, through the electrodes (3) in a confined space (41) within the tubular housing (4), and out through an outlet opening (43) of the tubular housing (4).

## Patentansprüche

1. Elektrodenanordnung (1) für die Herstellung von Injektionswasser für ein Erdölbohrloch durch Inaktivierung von organischem Material in einem Wasserstrom, wobei die Elektrodenanordnung (1) eine Längsachse (L) aufweist und umfasst:
- mindestens eine Elektrodeneinheit (2), die mindestens zwei Elektroden (3) umfasst, von denen mindestens eine Anode (3a) und eine Kathode (3b) ist, wobei die Anode (3a) der Kathode (3b) entspricht und in unmittelbarer Nähe zu dieser angeordnet ist, wobei mindestens ein Teil der Elektrodeneinheit (2) entlang der Längsachse trichterförmig ist, so dass mindestens ein Teil jeder Elektrode in einem Winkel in Bezug auf die Längsachse der Elektrodeneinheit angeordnet ist, und wobei jede Elektrode (3) ein Netz, durch das Wasser hindurchtreten kann, umfasst;
- ein rohrförmiges Gehäuse (4) zum Umschliessen der mindestens einen Elektrodeneinheit (2) und zum Definieren eines Strömungsweges für den Wasserstrom, wobei die Elektrodeneinheit (2) derart in dem Strömungsweg angeordnet ist, dass das in das rohrförmige Gehäuse (4) eintretende Wasser durch das Netz von sowohl der Anode (3a) als auch der Kathode (3b) hindurchgeht, um das organische Material in dem Wasserstrom in Kontakt mit Radikalen, die zwischen der Anode (3a) und der Kathode (3b) erzeugt werden, zu bringen, und so das besagte organische Material inaktivieren;
wobei die Elektrodenanordnung (1) mit einem Strömungsteiler zum Verteilen des Wasserstroms über das Netz der Elektroden (3) versehen ist.

2. Elektrodenanordnung (1) nach Anspruch 1, wobei der Strömungsteiler eines vom Folgenden umfasst:
- mindestens einen an einer Innenwand des rohrförmigen Gehäuses (4) angeordneten Stromstörer;
- Rillen in der Innenwand des rohrförmigen Gehäuses (4); und
- Düsen.

3. Elektrodenanordnung (1) nach Anspruch 1 oder 2, wobei jede der Elektroden (3) mindestens drei Elektrodenelemente (31, 32, 33) aufweist, die in einem Winkel zueinander angeordnet sind, um den trichterförmigen Abschnitt der Elektrodeneinheit (2) zu bilden.

4. Elektrodenanordnung (1) nach Anspruch 3, wobei jedes Elektrodenelement (31, 32, 33) ein Netz (311, 321, 331) umfasst.

5. Elektrodenanordnung (1) nach Anspruch 3 oder 4, wobei die Elektrodenelemente (31, 32, 33) plattenförmig sind.

6. Elektrodenanordnung (1) nach Anspruch 3 oder 4, wobei die Elektrodenelemente (31, 32, 33) gebogen sind.

7. Elektrodenanordnung (1) nach einem der vorhergehenden Ansprüche, wobei die Elektrodeneinheit (2) eine weitere Elektrode (3) umfasst.

8. Elektrodenanordnung (1) nach einem der vorhergehenden Ansprüche, wobei der trichterförmige Abschnitt der Elektrodeneinheit (2) eine polygonale Basisstruktur aufweist, wie z.B. trigonal, tetragonal, pentagonal oder hexagonal.

9. Elektrodenanordnung (1) nach einem der vorhergehenden Ansprüche, die eine Vielzahl von Elektrodeneinheiten (2) umfasst.

10. Elektrodenanordnung (1) nach Anspruch 9, wobei die Elektrodeneinheiten (2) aufgrund des trichterförmigen Abschnitts aufeinander stapelbar sind.

11. Elektrodenanordnung (1) nach einem der vorhergehenden Ansprüche, wobei die Elektrodeneinheit (2) ferner einen Basisabschnitt (21) zum Verbinden der Elektroden (3) mit einer Stromversorgung aufweist.

12. Elektrodenanordnung (1) nach Anspruch 11, wobei der Basisabschnitt (21) so geformt ist, dass der Umfang des Basisabschnitts (21) im Wesentlichen dem Aussenumfang des rohrförmigen Gehäuses (4) entspricht.

13. Elektrodenanordnung (1) nach Anspruch 11 oder 12, wobei der Strömungsteiler (44) in Verbindung mit dem Basisabschnitt (21) angeordnet ist.

14. Verfahren zur Inaktivierung von organischem Material in Wasser, wobei das Verfahren die folgenden Schritte umfasst:
- Bereitstellung einer Elektrodenanordnung (1) nach Anspruch 1 in einem Wasserstrom;
- Verbinden der Elektrodenanordnung (1) mit einer Stromversorgung (11); und
- Einlassen des Wassers durch eine Einlassöffnung (42) des rohrförmigen Gehäuses (4), über den Strömungsteiler, durch die Elektroden (3) in einem begrenzten Raum (41) innerhalb des rohrförmigen Gehäuses (4) und Auslassen durch eine Auslassöffnung (43) des rohrförmigen Gehäuses (4) heraus.

## Revendications

1. Un ensemble d'électrodes (1) pour la production d'eau d'injection pour un puits de pétrole par inactivation de matériau organique dans un flux d'eau, l'ensemble électrodes (1) ayant un axe longitudinal (L), et comprenant :
- au moins une unité d'électrodes (2), comprenant au moins deux électrodes (3) dont au moins une anode (3a) et une cathode (3b), l'anode (3a) correspondant à, et étant disposée à proximité immédiate de, la cathode (3b), dans lequel au moins une partie de l'unité d'électrodes (2) étant en forme d'entonnoir le long de l'axe longitudinal de sorte que au moins une partie de chaque électrode est disposée à un angle par rapport à l'axe longitudinal de l'unité d'électrodes, et dans lequel chaque électrode (3) comprend des maillages destinés au passage de l'eau,
- un boîtier tubulaire (4) servant à loger l'au moins une unité d'électrodes (2) et à définir un trajet de flux d'eau pour le flux d'eau; dans lequel l'unité d'électrodes (2) est disposée de sorte que le trajet de flux que l'eau entrant dans le boîtier tubulaire (4) suit passe à travers les maillages de l'anode (3a) et de la cathode (3b) afin d'amener le matériau organique dans le flux d'eau en contact avec des radicaux produits entre l'anode (3a) et la cathode (3b) ainsi inactivant ledit matériau organique; dans lequel l'ensemble d'électrodes (1) est pourvu d'un répartiteur de flux (44) afin de répartir le flux d'eau sur les maillages des électrodes (3).

2. Ensemble d'électrodes (1) selon la revendication 1, dans lequel le répartiteur de flux comprend un des suivants:
- au moins un déflecteur disposé sur la paroi intérieure du boîtier tubulaire (4);
- des rainures dans la paroi intérieure du boîtier tubulaire (4); et
- des buses.

3. Ensemble d'électrodes (1) selon la revendication 1 ou 2, dans lequel chacune des électrodes (3) comprend au moins trois éléments d'électrode (31, 32, 33) disposés à un angle l'un par rapport à l'autre pour former la partie en forme d'entonnoir de l'unité d'électrodes (2).

4. Ensemble d'électrodes (1) selon la revendication 3, dans lequel chaque élément d'électrode (31, 32, 33) comprend des maillages (311, 321, 331).

5. Ensemble d'électrodes (1) selon la revendication 3 ou 4, dans lequel les éléments d'électrode (31, 32, 33) sont en forme de plaque.

6. Ensemble d'électrodes (1) selon la revendication 3 ou 4, dans lequel les éléments d'électrode (31, 32, 33) sont incurvés.

7. Ensemble d'électrodes (1) selon l'une quelconque des revendications précédentes, dans lequel l'unité d'électrodes (2) comprend une autre électrode (3).

8. Ensemble d'électrodes (1) selon l'une quelconque des revendications précédentes, dans lequel la partie en forme d'entonnoir de l'unité d'électrode (2) a une structure de base polygonale, telle que trigonale, tétragonale, pentagonale ou hexagonale.

9. Ensemble d'électrodes (1) selon l'une quelconque des revendications précédentes, comprenant une pluralité d'unités d'électrodes (2).

10. Ensemble d'électrodes (1) selon la revendication 9, dans lequel les unités d'électrodes (2) sont empilables les unes sur les autres dû à la partie en forme d'entonnoir.

11. Ensemble d'électrodes (1) selon l'une quelconque des revendications précédentes, dans lequel l'unité d'électrodes (2) comprend en outre une partie de base (21) pour connecter les électrodes (3) à une source d'alimentation.

12. Ensemble d'électrodes (1) selon la revendication 11, dans lequel la partie de base (21) est formée de telle sorte que la circonférence de la partie de base (21) correspond sensiblement à la circonférence extérieure du boîtier tubulaire (4).

13. Ensemble d'électrodes (1) selon la revendication 11 ou 12, dans lequel répartiteur de flux (44) est disposé en connexion avec la partie de base (21).

14. Procédé pour inactiver un matériau organique dans l'eau, dans lequel le procédé comprend les étapes suivantes:
- fournir un ensemble d'électrodes (1) selon la revendication 1 dans un flux d'eau;
- connecter l'ensemble d'électrodes (1) à une source d'alimentation (11); et
- laisser entrer l'eau à travers une ouverture d'entrée (42) du boîtier tubulaire (4), via le répartiteur de flux, à travers les électrodes (3) dans un espace confiné (41) à l'intérieur du boîtier tubulaire (4), et hors à travers une ouverture de sortie (43) du boîtier tubulaire (4).
